# EUROPEAN PATENT APPLICATION

(11) **EP 0 832 952 A2**
(43) Date of publication of application: **01.04.1998**
(21) Application number: 97202769.2
(22) Date of filing: 09.09.1997
(51) Int. Cl.: C09J 1/02

(54) **Adhesive compositions comprising water glass, a low molecular weight dextrin, and a PH controlling agent**

(30) Priority: 26.09.1996 EP 96202688
(71) Applicant: Akzo-PQ Silica Vof, 3818 LE Amersfoort (NL)
(72) Inventor: Van de Heisteeg, Bartholomeus Johannes Jozef, 9481 HJ Vries (NL); Froentjes, Bouke Dirk, 9646 AJ Veendam (NL)
(74) Representative: Schalkwijk, Pieter Cornelis

(57) **Abstract**

The invention pertains to adhesive compositions comprising water glass, at least one low molecular weight dextrin, and at least one pH controlling agent, and not containing a mono-, di- and/or trisaccharide, and is characterized in that the dextrin is a low molecular weight dextrin with an Ostwald viscosity of less than 45 mPa.s when measured as a solution in water at 25°C and a concentration of 355 g/kg and that the pH of the adhesive is between 10 and 13. Such compositions demonstrate not only a high curing rate and a good wet tack, but also an excellent storage stability. The compositions are useful as a glue or sizing agent. When they are used as a glue, improved crush values of the finished products are observed.

## Description

The present invention pertains to adhesive compositions for paper, cardboard, and other paper or paper-like products that comprise water glass, at least one low molecular weight dextrin, and at least one pH controlling agent.

There is a demand for adhesives, especially of the kind used for cementing or sizing cardboard and paper, with a high dry solid weight content and good storage stability. A high dry solid weight content will not only result in fast curing rates but also leads to reduced water uptake by the substrates to be cemented. Known formulations containing just water glass, dextrin, and a pH controlling agent are not storage stable at ambient temperature and/or have a too high viscosity for normal processing. The poor storage stability typically manifests itself in the floating out of one or more of the ingredients. In the case of known water glass-dextrin products, very often the dextrin floats out. As a solution to this problem different types of fillers have been proposed. However, the use of solid fillers, in the high concentrations that are needed to obtain the desired effect, is less desired, because such a solid may settle during storage, will reduce the adhesive strenght, and because it may affect the equipment. Since it often is an abrasive, it may for instance cause an increased wear of the pumps. Also, the use of such fillers may lead to an unsufficient wet tack and/or curing rate of the adhesive.

Moreover, there is a need for cemented articles with a higher crush value than is presently obtained when, for instance, plain water glass is used as the adhesive. Such higher crush values will allow the use of thinner-walled articles, with attendant savings.

Therefore, there is still a need for new water glass based adhesive compositions with improved properties.

It is noted that US patent 3,433,691 discloses adhesive compositions comprising up to 90 % by weight of water glass and up to 10% of a borated dextrin. However, these formulations are not storage stable, more particularly, as stated in US patent 3,767,440 "Significantly objectionable floating out of the dextrin was generally encountered in less than a few hours after mixing". Therefore, such compositions are to be improved considerably in order to allow storage for at least one month without separation, as is desired.

In accordance with the present invention, it has now surprisingly been found, that adhesive compositions with a high dry solid weight content, with a good wet tack, a fast curing rate and excellent storage stability can be composed using water glass and dextrin.

The invention is characterized in that the dextrin is a low molecular weight dextrin with an Ostwald viscosity of less than 45 mPa.s when measured as a solution in water at 25°C and a concentration of 355 g/kg, while the pH of the adhesive is between 10.5 and 13.5.

Incidentally, the above-mentioned patent US 3,767,440 discloses an adhesive comprising 80-92 % water glass, 1.5-6 % dextrin and 4.5-12 % of a clay slurry. The use of such a clay, especially in the claimed quantities, may have an adverse effect on the price and properties of the adhesive. The dextrin that is used is not of the low-molecular weight type. This document does not disclose or suggest compositions according to the invention that have a limited number of ingredients and show a good wet-tack, a fast curing rate, and excellent storage stability.

In the adhesive compositions according to the invention, various low-molecular weight dextrins can be applied. The term low-molecular weight dextrin as used herein is meant to encompass all hydrolysis products of celluloses as obtained by heating acidified native starch at a temperature between 140 and 180°C, preferably between 150 and 170°C, of which a solution of 335 g dry product in 1 kg water has an Ostwald viscosity of less than 45 mPa.s at 25°C. Typically, such preferred dextrins are referred to as low-molecular weight "yellow dextrins". Compared to the almost linear dextrins that are obtained by heating acidified native starch at a lower temperature, so-called "white dextrins", the yellow dextrins show a more branched structure. It is preferred to use between 5% w/w and 25% w/w of the low-molecular weight dextrin. More preferably, between 10 and 25% w/w of a low-molecular weight dextrin is used. A concentration of low-molecular weight dextrin above 25% w/w of the adhesive is undesired since such adhesives show a reduced storage stability and a too high viscosity. A too low concentration of dextrin does not lead to a good wet tack of the final adhesive.

In the compositions according to the invention, water glass with a SiO₂ :Na₂O ratio between 2 and 4 and a dry solid content between 15 and 50% w/w can be used. However, other types of water glass may also be used, depending on the specific use of the adhesive composition. In a most preferred embodiment, the water glass in the composition has a dry solid weight content of at least 38% w/w.

Depending on the type of equipment used to produce and/or dispense the adhesive composition, there may be restrictions as to the viscosity of the composition that is to be used. Obviously, the lower viscosity boundary will not form a problem. However, depending on the equipment used, the viscosity may exceed the maximum acceptable value. In the latter case, dextrin of lower-molecular weight or, alternatively, compositions with a lower dry solid weight content are recommended. To reduce the dry solid weight content, the composition is diluted with water, or the amount of dextrin is reduced. It is also possible to reduce the dry solid weight content by using a water glass with a lower dry solid weight content (with a lower specific gravity). Preferably, the viscosity of the composition ranges from 100 to 5000 mPa·s at 20°C when measured with a Brookfield RVF at 20 min⁻¹. More preferably, the viscosity ranges from 300 to 2500 mPa·s at 20°C. Most preferred are compositions with a viscosity in the range of 400 to 1250 mPa·s at 20°C.

The adhesive compositions according to the invention must contain one or more pH controlling agents such as caustic soda, alkali metal carbonate, alkali metal borate, alkali metal hydrogen phosphate, and alkali metal phosphate. It is preferred to use such pH controlling agents in the preparation of a low-molecular weight dextrin solution, since they typically facilitate the mixing of the low-molecular weight dextrin and the water glass and also have a positive effect on the viscosity and the storage stability of the adhesive composition. Alternatively, a low-molecular weight borated dextrin can be used.

If a low-molecular weight dextrin solution is used to prepare an adhesive composition according to the invention, the pH of this dextrin solution preferably is above 7, more preferably above 8, and most preferably about 9. Such a higher pH of the dextrin solution facilitates the blending of the dextrin with the water glas and has a favourable influence of the stability of the final adhesive formulation. Preferably, K₂CO₃ is used to adjust the pH of the dextrin solution, since it proved to be most effective. The pH of the adhesive composition preferably is between 10.5 and 13.5, to ensure that no material will separate during a storage period of at least one month. Preferably, the adhesive compositions are storage stable for more than three months, while a storage stability of more than six months is most preferred.

Optionally, the adhesive compositions contain adjuvants such as lignin; lecithin; cross-linking agents, e.g. siliconates; polyalcohols, e.g. glycerin; inert fillers (e.g. chalk, urea, and clays like bentonite and kaolin); thickeners, e.g. xanthane gum, Arabic gum, and alginates; and dextrin-stabilized polyvinyl acetate (PVAc) dispersions. Preferably, such adjuvants are soluble in the final composition according to the invention. When such adjuvants are used, for instance in adhesives for high-speed tube winding processes, it is preferred to use a dextrin-stabilized polyvinyl acetate to further improve the flexibility and hence the machinability of the finished articles.

The adhesive compositions according to the invention exhibit a wet tack equal to or greater than the wet tack of plain 38/40 water glass. The wet tack in this connection is defined as the stripping energy, measured with the Adhesion Tester as described under "procedure 1" in this document, after 0 minutes of open time and 15 seconds of closed time. If the wet tack is insufficient, the amount of low-molecular weight dextrin in the composition is to be increased.

More preferably, the adhesive compositions not only have an acceptable wet tack, but also a curing rate sufficient to give a paper stripping energy greater than 0.40 J, most preferably more than 0.60 J after 0 seconds of open time and 45 seconds of closed time, measured in accordance with the aforementioned procedure 1.

When the adhesive compositions according to the invention are applied, the water in the composition is partially absorbed by the substrate. Upon subsequent drying, the substrate may be affected by this water. Thus, the substrate may become warped, wrinkle, show bubbles, or the like. In order to avoid such effects, it is preferred to have compositions with a high dry solid weight content. Moreover, drying will take a shorter time whenever the dry solid weight content is increased. Therefore, the dry solid weight content is preferably as high as possible. More specifically, a dry solid weight content of at least 35% w/w is preferred. Most preferred is a dry solid weight content of more than 40% w/w.

In a further embodiment, the invention relates to the use of adhesive compositions comprising water glass, a low-molecular weight dextrin and one or more pH controlling agents as a glue or sizing agent. Preferably, use is made of adhesive compositions which comprise more than 70% w/w of water glass with a dry solid weight content of at least 36% w/w, more than 5% w/w of low-molecular weight dextrin, and one or more pH controlling agents. Most preferred are such compositions whereof the pH is between 10.5 and 13.5. The adhesive compositions are used in both hot and cold processes, to manufacture paper, cardboard or paper-like products. Compositions according to the invention have been used with good results in processes where temperatures from 10 to 70°C are applied, but their application is not limited to this range.

In a further embodiment, the invention pertains to articles, for example, paper tubes, honeycomb corrugated board, and the like, produced using an adhesive composition according to the present invention. Compared with articles of the prior art, the articles according to the invention have a higher crush strength. It was found that the use of said adhesive compositions leads to 10-25% higher crush values. For example, articles produced with plain water glass with a crush value of 1000 N were observed to have a crush value of about 1200 N when an adhesive according to the invention was used. If the strength of the article is not to be augmented, a thinner-walled article, with attendant cost-savings, is feasible when it is produced according to the invention.

The compositions according to the invention are useful as glue or sizing agents for paper, cardboard or other paper or paper-like products, since they combine a high solids content, a good wet tack, an increased curing rate, and good machinability with excellent storage stability when compared with the currently used adhesives. Moreover, they are also suitable for the production of foundry cores and moulds. The compositions are pre-eminently suited for use in cardboard tube winding processes. Since the compositions comprise basically water glass and a low-molecular weight dextrin, they can be classified as environmentally friendly.

The invention is illustrated by the following examples

### Experimental

### Materials used:

- Water glass 38/40, with a density of 1,35-1,38 kg/l, supplied by Akzo-PQ Silica Vof
- Low-molecular weight dextrin type Avedex® 28 La 21, ex Avebe, with an Ostwald viscosity of 28 mPa.s
- All other chemicals were technical grade products of Baker.

### Procedures:

1. The paper stripping energy is determined with the aid of a Ströhlein® Adhesion Tester, which procedure is recognized by the Fipago (Fédération Internationale des Fabricants de Papier Gommes). The value for the stripping energy depends on the type of paper used in the tests and on the experimental conditions, like temperature, humidity, and the thickness of the glue layer. The values as presented throughout this document were determined as follows:
   The test liner, being the paper attached to the base, was of the "testing paper 8283" type and can be obtained from Retsch (NL). The paper on the pendulum was of the MG-kraft type and supplied as "Velenhendaye S (70g)" by Gascoinge (FR). The smooth side of the MG-kraft paper is cemented to the test liner with 80 g·m⁻² of adhesive composition. The dimensions of the test liner were: length 100 mm, width 60 mm. The dimensions of the MG-kraft paper were: length 300 mm, width 30 mm. The test conditions were: temperature 23°C and relative humidity 50%. For reference purposes, a standard sodium water glass (38/40 water glass) with a specific gravity of 1,38-1,41 kg/l, containing about 9,0% w/w Na₂O and about 29,6% w/w SiO₂, gave a stripping energy of 0.15-0.20 J under the conditions used.
2. The adhesive compositions were produced as follows:
   2.1 A solution of dextrin and specified pH controlling agent in water was made by mixing these ingredients in the amounts as defined below, and subsequent dissolution at 85°C.
   2.2 The solution of 2.1 was combined in various ratios with water glass and NaOH at a temperature of 30°C.
   2.3 If so desired, water was added to control the viscosity.

### Examples 1-5

A low-molecular weight dextrin solution was made using 3 kg water, 11.25 kg low-molecular weight dextrin, and 0.75 kg potassium carbonate. Using this dextrin solution in a quantity as specified below with water glass 38/40, and 1 % by weight on the total formulation of NaOH gave an adhesive composition according to the invention. In the following table the results are presented.

| Example | Dextrin sol. (% w/w) | wet tack (J) | PSE45 (J) | Viscosity (mPa·s) |
|---|---|---|---|---|
| 1 | 5 | 0.20 | 0.42 | 120 |
| 2 | 10 | 0.21 | 0.53 | 180 |
| 3 | 15 | 0.22 | 0.63 | 270 |
| 4 | 20 | 0.29 | 0.58 | 420 |
| 5 | 25 | 0.28 | 0.71 | 650 |

All these adhesive compositions were storage stable for at least one month. The adhesive of examples 1-3 were storage stable for more than six months.

### Comparative Examples A-B

Example 3 was repeated using other types of dextrin. The following results were obtained:

| Example | Dextrin (type) | Ostwald visc. (mPa.s) | Stability |
|---|---|---|---|
| A | Avedex 48 MC 14 | 48 | < 1 day |
| B | Avedex 85 HG 13 | 85 | < 1 day |

The dextrin used in Example A is representative for medium-molecular weight yellow dextrins, while the dextrin of Example B is representative for high-molecular weight yellow dextrins.

### Examples 6-7 and Comparative Examples C-F

Example 3 was repeated except that the pH of the final product was varied by using more or less NaOH and/or HCl. The following results were obtained:

| Example | pH | Storage stability |
|---|---|---|
| C | 7 | not stable |
| D | 9 | not stable |
| E | 10 | not stable |
| 6 | 11.5 | stable |
| 7 | 13 | stable |
| F | 14 | not stable |

## Claims

1. An adhesive composition comprising water glass, at least one low molecular weight dextrin, and at least one pH controlling agent, characterized in that the dextrin is a low molecular weight dextrin with an Ostwald viscosity of less than 45 mPa.s when measured as a solution in water at 25°C and a concentration of 355 g/kg and that the pH of the adhesive is between 10.5 and 13.5.

2. An adhesive composition according to claim 1 that does not contain a mono-, di- and/or trisaccharide.

3. A composition according to claim 1 or 2, characterized in that the low molecular weight dextrin is used in a concentration between 5 and 25% by weight on the total composition.

4. A composition according to claim 3, characterized in that the low molecular weight dextrin is used in a concentration between 10 and 25% by weight on the total composition.

5. A composition according to any one of claims 1-4 wherein the low-molecular weight dextrin is a low-molecular weight yellow dextrin.

6. Process to make an adhesive composition comprising water glass, at least one low molecular weight dextrin, and at least one pH controlling agent, and not containing a mono-, di- and/or trisaccharide, characterized in that a solution of said dextrin is combined with said water glass.

7. Process according to claim 6, characterized in that the pH of the dextrin solution, when combined with the water glass, is between 7 and 11.

8. Process according to claim 7, characterized in that the pH of the dextrin solution, when combined with the water glass, is between 8 and 10.

9. A process for manufacturing paper, cardboard or paper-like products which comprises the use of an adhesive composition according to any one of claims 1-5.

10. A paper, cardboard or paper-like product obtainable by the process of claim 9.
